(19)

Europäisches
Patentamt
European
Patent Office
Office européen
des brevets

(11) **EP 2 375 110 A1**

(12) **EUROPEAN PATENT APPLICATION**
published in accordance with Art. 153(4) EPC

(43) Date of publication:
**12.10.2011 Bulletin 2011/41**

(21) Application number: **09835945.8**

(22) Date of filing: **17.03.2009**

(51) Int Cl.:
*F16J 15/06* $^{(2006.01)}$        *F16J 15/18* $^{(2006.01)}$

(86) International application number:
**PCT/CN2009/000284**

(87) International publication number:
**WO 2010/075658 (08.07.2010 Gazette 2010/27)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **31.12.2008 CN 200810189911**

(71) Applicants:
• **Zhejiang China Valve Co., Ltd.
Wenzhou, Zhejiang 325024 (CN)**

• **Xu, Changxiang
Wenzhou, Zhejiang 325024 (CN)**

(72) Inventor: **XU, Changxiang
Wenzhou
Zhejiang 325024 (CN)**

(74) Representative: **Leszczynski, André
NONY & ASSOCIES
3, rue de Penthièvre
75008 Paris (FR)**

(54) **A SEALING STRUCTURE WITH GROOVE AND GASKET**

(57)    A gland seal designed according to the joint's factors m and y and the seal-designing rule refined from ASME Code to result in its minimum necessary seating stress y at no fluid pressure being so small to be ignorable that its seeing maintenance factor or disturbance resistance index m, equal to the joint's sealing actuation force divided by the joint's unseating actuation force, can be used to indicate its sealing safety at a fluid pressure: when in = 1, its sealing actuation force equals its unseating actuation force or equals its "seating area x fluid pressure" and so it can be kept leak-free under no upset disturbance condition and may leak at an upset moment, and when m > 1, it can be resistant to an upset disturbance and be the greater, the more resistant. The factor m for a self-energizing tight joint is equal to its fluid's sealing actuation area divided by its fluid's unseating actuation area.

Fig.2a

EP 2 375 110 A1

**Description**

Field of the invention

The invention relates to axial and radial pressure-tight or self-energizing seals, particularly to basic gland seals, used in fluid medium or power conveying systems.

Background of the invention

Any usually machined metallic surface is microscopically of irregularities directly causing a leak joint of two surfaces, and hence the tight joint of metallic surfaces in the prior art is often made by a soft gasket seated into irregularities on me jointing surfaces, but the tight joint made by a soft material has to bear some new leaking microchannels in the material bulk. Patent US 5516122 proposes an ultra high vacuum O-ring seal using elastomer crammed tight into a circular groove to achieve an object of enhancing its sealing ability by increasing the leak path around it and decreasing the exposed surface area for gases to enter and leave it.

In fact, whether for a dynamic application or for a static application, the effective means to prevent fluid from leaking along the seating surface is to provide for a seal an enough seating stress to seat the seating material fully into the irregularities on the seated surface, and the effective means to prevent fluid from leaking through the seating material bulk is to provide for a self-energizing O-ring seal an enough uniform squeeze by a fluid pressure to close its internal microchannels, especially to close their ports on its surface, because its material is too soft and its microchannels are too curved to have its microports opened on its pressurized surface; if increasing the leak path around an O-ring was the key to preventing gases from leaking around the O-ring as mentioned in US 5516122, the simplest means to increase the leak path would be to increase the seating length either by increasing the height squeeze or even in a groove cramming way, or by changing the integral groove into two half grooves and using a rectangular groove instead of a circular groove because the perimeter of a rectangle is greater than a circle when the area is identical. Actually, the technical solution in US 5516122 is increasing the seating stress and the uniform squeeze of a gland seal for vacuum application, but does not relate to a universal seal-designing rule and so can not quantitatively ensure the seating stress and the uniform squeeze or the sealing actuation force required to get a safest seal cheap. Based on the universal seal-designing rule newly proposed in the invention, a usual stable material can behave both like a solid and like a liquid indicated by its Poisson's ratio, and an elastomer looks further like both a viscous liquid and a elastic solid in behaviors, and any designing of safe seals needs to make full use of the solid and liquid behaviors of a sealing material under pressure; however, so far the material's liquid nature has been only used to explain the cold flow or creep of the material. The transmittance of forces in viscous liquids is so degressive and in elastic solids, so different in load-applying directions and in non-load-applying directions that any gasket under open compression can not have a so uniform squeeze as to close all the microchannels in each direction at the same time, or only a gasket under enclosed compression can have a so enough uniform squeeze on its whole surface as to close all the microchannels in each direction at the same time. Besides, the gasket material under enclosed compassion can be like the hydraulic oil in cylinders to have an actual bearing strength far higher than its material allowable strength as long as the extrusion gap is enough small. It is the real reason why the technical solution in US 5516122 is practicable, but the practicability does not means that the explanations in US 5516122 are correct about why a self-energizing O-ring seal in the prior art is not suitable for ultra high vacuum applications because it can be provided with the same enough seating stress and the same enough uniform squeeze by atmospheric pressure as by fasteners if designed according to the seal-designing rule of the invention. Therefore, any gland seal compressed tight in an enclosed designed groove either by fasteners or by fluid pressure is an ideal seal.

ASME Boiler & Pressure Vessel Code -Section VIII -Division 1 -Appendix 2 (hereafter called ASME Code) proposes two gasket factors m and y used to calculate loads of gasketed flanges and adopted by EN 13445; y is the minimum necessary seating stress on the gasket to provide a seal at atmospheric temperature and pressure or at no fluid pressure, determined by testing at a fluid pressure of 0.14 bars, and $m = (W - A_2 P)/A_1 P$ is a factor that provides an additional preload needed in the flange fasteners to maintain a compressive load on the gasket at a fluid pressure, where W is the total fastener force, $A_2$ is the inside area of the gasket (equivalent to the actuating area of fluid on the flange cover), $A_1$ is the seating area of the gasket, and P is the fluid pressure. Undoubtedly, the force $(W - A_2 P)$ is what to be able to result in a sealing stress on the seating surface at a fluid pressure P, whereas the force $A_1 P$ is what to be able to cause an unseating force on the seating surface of the gasket by leaking fluid at a fluid pressure P; i.e. the factor m, for any tight joint, is the ratio of the force capable of resulting in a sealing stress on the seating surface of the joint to the unseating force of leaking fluid on the seating surface of the joint, and for a self-energizing tight joint, the ratio of the self-energizing force of the joint to the unseating force of leaking fluid on the seating surface of the joint, as well as for a pressure-tight joint the ratio of the sealing force created by fasteners to the unseating force of leaking fluid on the seating surface of the joint Obviously, the magnitude of the factor m should have been no direct thing to do with the factors, and the greater the value of m, the more reliable the tight joint. However, it seems that ASME Code has not yet found the implied seal-designing law because major values of m and y in the present release of ASME Code are still determined by the equation: $180 \cdot (2m-1)^2 = y$, but has found some problems of the equation because minor values of m and y in the present release have not been in accordance with the equation. As ASME Code does not relate the gasket factors m and y to the leak rate, the PVRC (Pressure Vessel Research Council) and EN 13555 respectively propose new gasket constants or parameters related to tightness or leak rate and substituted for the gasket factors m and y, thus the gasket design becoming more complicated. However, the new PVRC's test method has been advanced to ASTM WK 10193-2006 but has not come into force for decades, and EN 13445 adopting the gasket factors m and y has not yet be superseded by EN 13555 coming into force in 2004. It seems that these newly specified constants or parameters may still have something wrong.

Summary of the invention

The object of the invention is to propose some basic gland seals whose sealing actuation force is quantitatively ensured and universal for dynamic and static applications, based on refining or correcting and improving ASME Code's concepts using its gasket factors in and y to design a gasketed flange.
The following is the joint's factors m and y and the seal-designing rules redefined from ASME Code and used in the invention:

1 Any tight joint is an upset impulse amplifier, and once the tight joint is disturbed to an extent causing an enough decrease of seating stress, the fluid will speedily seep into the seating surface in such a way from a partial to the whole surface as to cause a greater and greater unseating force finally up to "seating area x fluid pressure" thereon just before the leaking moment. Accordingly, the seating maintenance factor or disturbance resistance index m of any tight joint is equal to the force capable of resulting in a sealing stress on the seating surface of the joint divided by the unseating force of leaking fluid on the seating surface of the joint; thus the factor m of a self-energizing tight joint is equal to the self-energizing force of the joint divided by the unseating force of leaking fluid on the seating surface of the joint, and the factor m of a pressure-tight joint (non-self-energizing) is equal to the sealing force created by fasteners divided by the unseating force of leaking fluid on the seating surface of the joint. It is obvious that the factor m is a parameter having no direct thing to do with the factor y. Since the fluid's unseating force only emerges at the upset disturbance output moment and does not exceed "seating area x fluid pressure", a pressurized joint, when m = 1, has a sealing actuation force so equal to its unseating actuation force as to be kept leak-free under no upset disturbance condition and to leak at an upset moment, and when m > 1, gets resistant to an upset disturbance and is the greater the m's value, the more resistant.

2 However, it is impossible for joints sealing actuation force given according to a lower value of m to provide an initial seal for a tight joint at no fluid pressure, much less to provide a sealing maintenance or a disturbance resistance for the joint at a fluid pressure if joint's minimum necessary seating stress y required to provide an initial seal at no fluid pressure is too great, the stress y being determined by testing at a fluid pressure of 0.14 bars; i.e. the necessary and sufficient condition significant or tenable for the idea or equation of joint's seating maintenance factor m should be that joint's minimum necessary seating stress y shall be small to be ignorable. If the stress y is quite small, the pre-fastening force not resulting in any sealing stress at ultimate working pressures can surely provide the initial seal at no fluid pressure, and of course the joint only needs an additional force equal to m times the fluid's unseating force on the seating surface at a fluid pressure to maintain and strengthen the initial seal. Therefore, any designing of tight joints needs at first to design a seating unit whose minimum necessary seating stress y is so small to be ignorable as to make significant the idea or equation of joints sealing maintenance factor m or at first to consider getting a leakfree seal at no fluid pressure, and then consider maintaining the leakfree seal at a fluid pressure.

3 If a microcosmic line contact followed a surface contact is used as the seating unit, a tight joint can be provided at first with such a line contact whose seating area is approximate to zero or whose local seating stress is approximate to infinite as to be capable of getting a safest initial seal by a less jointing load, and then with such a surface contact following and protecting the line contact for ever from disappearing as to be capable of getting a small to be ignorable minimum necessary seating stress y (in such a way to use a less load divided by a greater area) and as to need only an additional force equal to m times the fluid's unsealing force on the seating surface at a fluid pressure to maintain and strengthen the initial seal.

Clause 5.2 of EN 13555 defines what for the seating surface to be seated into to be the irregularities caused by the surface roughness, but the roughness produced by modem common turning and boring methods can not exceed $R_a$ 1.6 $\mu$m (see Fig. B1 of ASME B46.1), and accordingly a sealing microsawtooth ring joint of two opposing facings is especially proposed one of which is a full flat or full plain surface used as the seated surface and the other of which is a designed facing used as the seating surface with one or more microsawtooth rings whose crest is a cutting edge whose corner or whose crest angle is about 90°~120°, whose tooth height $Z_1$ is about 10~20 times the roughness $R_a$ of the seated surface or the full plain surface, and the ratio of the tooth pitch $X_s$ to the tooth height $Z_t$ equals 20~500 (just corresponding to the ratio of the width $X_s$ to the height $Z_t$ of profile elements between the surface roughness with wider profile elements and the surface waviness with narrower profile elements) so as to ensure a microcosmic line contact followed by a surface contact protecting the line contact forever from disappearing when the two opposing facings are joined tight together. Thus it is very ideal that there are always between two jointing surfaces both a seating line contact provided by the sawtooth ring edge and a bearing surface provided by the edge-following surface to protect the line contact from excessive being compressed or from plastic deforming and also to ensure a small to be ignorable minimum seating stress y required to provide an initial seal at no fluid pressure.

Because the microsawtooth ring of the invention can ensure that the minimum necessary seating stress y of any tight joint including metal to metal joints is so small to be ignorable as to make fully and universally tenable the idea or equation of joint's sealing maintenance factor m or a new seal-designing rule refined from ACME Code, the invention proposes some basic gland seals whose sealing actuation force is quantitatively ensured based on the seal-designing rule:

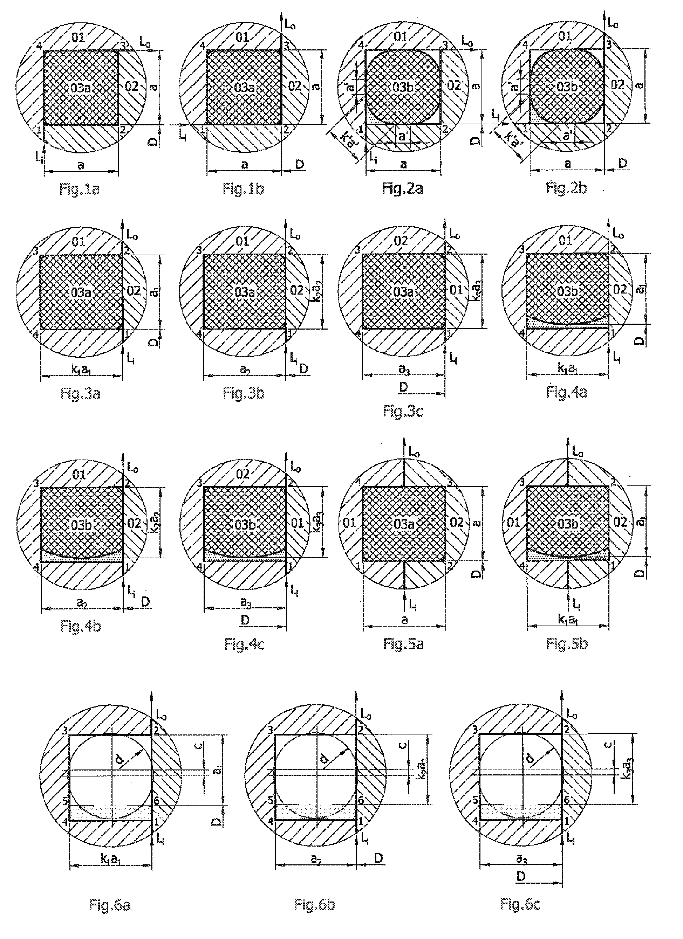

1. A curve leak type of pressure-tight gland seals, as shown Fig. 1, comprising a square section of annular grooves and a square section of annular gaskets crammed tight therein, wherein the leaking path of the gland seal is of a curve in section, and sealing maintenance factor m of the gland seal has a value of more than one, where m is the ratio of the fastener's actuation force capable of resulting in a sealing stress on the seating surface of the gasket to the unseating actuation force of leaking fluid on the seating surface of the gasket.

2. A curve leak type of self-energizing gland seals, as shown in Fig. 2, comprising a square section of annular grooves and an O-shaped or non-O-shaped section of annular gaskets not crammed to the pressurized wall of the groove, wherein the leaking path of the gland seal is of a curve in section, and the sealing maintenance factor m of the gland seal has a value of more than one, where m is the ratio of the self-energizing actuation force of the gasket to the unseating actuation force of leaking fluid on the seating surface of the gasket.

3. A straight leak type of pressure-tight gland seals, as shown in Fig. 3, comprising a rectangular section of annular grooves and a rectangular section of annular gaskets crammed tight therein, wherein the leaking path of the gland seal is straight in section, and the sealing maintenance factor m of the gland seal has a value of more than one, where m is the ratio of the fastener's actuation force capable of resulting in a sealing stress on the seating surface of the gasket to the unseating actuation force of leaking fluid on the seating surface of the gasket.

4. A straight leak type of self-energizing gland seals, as shown in Fig. 4, comprising a rectangular section of annular grooves and a rectangular section of annular gaskets not crammed to the pressurized wall of the groove, wherein the leaking path of the gland seal is straight in section, and the sealing maintenance factor m of the gland seal has a value of more than one, where m is the ratio of the self-energizing actuation force of the gasket to the unseating actuation force of leaking fluid on the seating surface of the gasket.

5. A straight leak type of self-energizing gland seals, as shown in Fig. 6, comprising a rectangular section of annular grooves and an O-shaped section of annular gaskets (called an O-ring) not crammed to the pressurized wall of the groove, wherein the leaking path of the gland seal is straight in section, but the design for face seal applications (where the gasket's end face is the seating surface) shall satisfy the inequality: $(1 + a_1/D) < k_1 < 4/\pi$, where $k_1$ is the ratio of the height $(k_1a_1)$ of the groove to the theoretical seating width $(a_1)$ of the rectangular ring into which the O-ring got in the pressurized groove, D is the theoretical minor diameter of the rectangular ring, and $\pi$ is the pi; the design for rod seal applications (where the groove is in the cylinder) shall satisfy the inequality: $(1 + a_2/D) > k_2 > \pi/4$, where $k_2$ is the ratio of the theoretical seating width $(k_2a_2)$ of the rectangular ring into which the O-ring got in the pressurized groove to the height $(a_2)$ of the groove, D is the minor diameter of the groove, and $\pi$ is the pi; and the design for piston seal applications (where the groove is in the piston) shall satisfy the inequality: $(1 - a_2/D) > k_3 > \pi/4$, where $k_3$ is the ratio of the theoretical seating width $(k_3a_3)$ of the rectangular ring into which the O-ring got in the pressurized groove to the height $(a_3)$ of the groove, D is the major diameter of the groove, and $\pi$ is the pi.

According to the idea of joint's factors (m and y) refined by the invention, the sealing maintenance factor (m) of a self-energising tight joint is equal to its fluid's sealing actuation area divided by its fluid's unseating actuation area because its sealing actuation force and its unseating actuation force result from an identical fluid pressure; i,e, the factor (m) of a self-energizing tight joint is its inherent parameter, only related to its magnitudes of two fluid's actuation areas but not related to its material strength and its seated surface texture or not rented to its minimum necessary seating stress (y) at no fluid pressure, and can be changed by changing its design and size, or not a fixed value of zero specified in ASME Code. The sealing maintenance factor (m) of a pressure-tight joint is equal to its fastener-created sealing force divided by its fluid-caused unseating force on its seating surface because its sealing actuation force is pre-provided by fasteners; i.e. its factor (m) is only related to its fastening force resulting in a sealing stress and its unseating force caused by leaking fluid on the seating surface, but not related to its material strength and its seated surface texture, or not related to its minimum necessary seating stress (y) at no fluid pressure, and can be changed within the material's allowable strength by changing its design and size to obtain an adequate sealing reliability; however, ASME Code incorrectly relates the gasket factor (m) to the gasket factor (y) by an equation of 180. $(2m - 1)^2 = y$. Any tight joint with its factor (m) equal to one will be in a leaky or leak-free critical state because its sealing actuation force equals its unseating actuation force; i.e. any tight joint shall have a sealing maintenance factor (m) with a value over one and can be in a stable leakfree state as the value is slightly more than one; however, in the light of ASME Code's incorrect concept, the gasket factor (m) of a tight joint in a leaky or leak-free critical state seems 0~6.5 and changes with its material and surface texture. Thus it can be seen that the joint's factors (m and y) and the seal-designing rule of the invention originate in but are most different from the gasket's factors (m and y) and the seal-designing rule of ASME Code, and as it where, the invention's factors and rule are of a more useful finished product and the ASME Code's, of an indispensable raw material. Therefore, the invention is a new creation following and sublimating the prior concepts of ASME Code.

Brief description of drawings

All the gland seals in the specification of the invention are illustrated with a locally enlarged sectional view, where D stands for the diameter of the relative annular groove or gasket and indicates the direction or position of the seating surface relative to the groove or gasket axis or indicates which is an axial seal whose seating surface is its end surface or a radial seal whose seating surface is its cylindrical surface, $L_i$ (indicating the entrance of leaking fluids) stands for the high pressure side of a gland seal, and $L_a$ (indicating the exit of leaking fluids) stands for the low pressure side of a gland seal.

Fig. 1 shows a curve leak type of pressure-tight gland seals in accordance with the invention, but Fig. 1a is of an end thrust type where the end of the tenon (of spindle or stem or piston) rests on the bottom of the groove (or hole or cylinder), and Fig. 1b is of a shoulder thrust type where the shoulder of the tenon (spindle or stem or piston) rests on the mouth of the groove (or hole or cylinder),

Fig. 2 shows a curve leak type of self-energizing gland seals in accordance with the invention, but Fig.2a is of an end thrust type where the end of the tenon (of spindle or stem or piston) rests on the bottom of the groove (or hole or cylinder), and Fig. 2b is of a shoulder thrust type where the shoulder of the tenon (spindle or stem or piston) rests on the mouth of the groove (or hole or cylinder).

Fig.3 shows a straight leak type of pressure-tight gland seals in accordance with the invention, but Fig. 3a is of a face type (an axial type) where the gasket's end face is the seating surface, Fig. 3b is of a rod or stem type (a radial type) where the gasket's cylindrical inside surface is the seating surface and the groove is in the cylinder or hole wall, and Fig. 3c is of a piton type (the other radial type) where the gasket's cylindrical outside surface is the seating surface and the groove is in the piton or spindle.

Fig.4 shows a straight leak type of self-energizing gland seals in accordance with the invention, but Fig. 4a is of a face type (an axial type) where the gasket's end face is the seating surface, Fig.4b is of a rod or stem type (a radial type) where the gasket's cylindrical inside surface is the seating surface and the groove is in the cylinder or hole wall, and Fig. 4c is of a piton type (the other radial type) where the gasket's cylindrical outside surface is the seating surface and the groove is in the piton or spindle.

Fig. 5a shows a variety of a face type (an axial type) of gland seals shown in Fig. 3a, and Fig. 5b shows a variety of a face type (an axial type) of gland seals shown in Fig. 4a.

Fig. 6 shows a straight leak type of self-energizing gland seals using an O-shaped section of annular gaskets (called an O-ring) in accordance with the invention, but Fig. 6a is of a face type (an axial type) where the gasket's end face is the seating surface, Fig. 6b is of a rod or stem type (a radial type) where the gasket's cylindrical inside surface is the seating surface and the groove is in the cylinder or hole wall, and Fig. 6c is of a piton type (the other radial type) where the gasket's cylindrical outside surface is the seating surface and the groove is in the piton or spindle.

Detailed description of the invention

The gland seals can be divided into curve leak type and a straight leak type according to the leaking path, into a self-energizing type and a pressure-tight type (non-self-energizing type) according to the sealing actuation force, and into a(n end) face type (an axial type) (where the gasket's end face is the seating surface), a rod or stem type (a radial type) (where the gasket's cylindrical inside surface is the seating surface and the groove is in the cylinder or hole wall), and a piton type (the other radial type) (where the gasket's cylindrical outside surface is the seating surface and the groove is in the piton or spindle) according to the position or direction of gaskets or gasket's seating surfaces, As shown in Figs. 1 and 2, a curve leak type of gland seals has a leaking path $L_i \rightarrow L_o$ in section that is at first along curve 1-4-3 and then along curve 1-2-3 because surface 1-4 has a greater seating area and a smaller seating stress than surface 1-2, and surface 4-3 has a greater seating area and a smaller seating stress than surface 2-3. As shown in Figs. 3 and 4, a straight leak type of gland seals has a leaking path $L_i \rightarrow L_o$ in section that is along straight 1-2, The gasket 03a in Figs. 1a~1b and Figs. 3a~3c is crammed tight in its groove and has no fluid actuation area and no self-energizing ability, whereas the gasket 03b in Figs. 2a~2b and Figs. 4a~4c is not crammed to the pressurized wall of its groove and has some fluid actuation area and some self-energizing ability. The gland seal in Figs.1a and 2a, where the end of the tenon (of spindle or stem or piston) rests on the bottom of the groove (or hole or cylinder), can be called an end thrust type; whereas the gland seal in Figs.1b and 2b, where the shoulder of the tenon (spindle or stem or piston) rests on the mouth of the groove (or hole or cylinder), can be called a shoulder thrust type. The gland seal in Figs.3a and 4a, where the gasket's end surface is the seating surface, can be called a(n end) face type (an axial type); whereas the gland seal in Figs.3b and 4b, where the gasket's cylindrical inside surface is the seating and the groove is in the cylinder or hole wall, can be called a rod or stem type (a radial type), and the gland seal in Figs.3c and 4c, where the gasket's cylindrical outside surface is the seating surface and the groove is in the piton or spindle, can be called a piton type (the other radial type). All these gland seals are in accordance with the invention and used as the tight joint of parts 01 and 02.

The gasket material between two jointing metallic surfaces is far softer than the metallic material and enable the joint to get leakfree at no fluid pressure by utilizing the pre-fastening force not resulting in any scaling stress at ultimate working pressures; i.e. the minimum necessary seating stress y of the soft-gasketed metallic joint can be so small to be ignored as for the tight joint to need not using rings on its gasket's seating surface but directly using the definition of the sealing maintenance m to design or calculate a sealing actuation force to maintain the initial seal got at no fluid pressure. Actually, it is ideal to design microsawtooth rings on a hard jointing surface but not on a soft jointing surface because the harder the seating line, the more impossible damage in jointing operations, the more approximate to zero the seating area in operations, and the easier to produce a local seating stress approximate to infinite at a small jointing pressure. Therefore, it can be said that the sealing microsawtooth ring joint of the invention is required only for the invention to establish a seal-designing rule used to design the basic gland seals of the invention, or the sealing microsawtooth ring joint is not necessarily required in the basic gland seals of the invention.

According to the original definition in the invention, the sealing maintenance factor or disturbance resistance index (m) of a joint is equal to the force capable of resulting in a sealing stress on its seating surface divided by the unseating force of leaking fluid on its seating surface. Some joints have a sealing actuation force originally perpendicular to the seating surface and can fully result in a sealing stress, but some joints have a sealing actuation force originally not perpendicular to the seating surface and may not fully result in a sealing stress. Thus designing a joint tight according to the invention shall use the force capable of resulting in a normal force on its seating surface to ensure that its value of m is more than one.

A usual sealing material is a viscoelastic substance with solid and liquid coexisted therein. Pressure transmittance in liquid is uniform in each direction, and in solid, different in longitudinal and transverse directions. Accordingly, a soft gasket such as elastomer with an enough liquid behavior or with a Poisson's ratio approximate to 0.5 can fully change the pressure on its fluid's sealing actuation surface into the sealing stress on its seating surface, and a hard gasket without an enough liquid behavior or without a Poisson's ratio approximate to 0.5 could at most half change the pressure on its fluid's sealing actuation surface into the seating stress on its seating surface according to Poisson's deformation and hooke's law because the Poisson's ratio of a usual solid does not exceed 0.5.

Because the seating stress for pressure-tight gland seals is finally ensured by assembling, the pre-fastening force required to achieve a certain value of m for a curve leak type shall be the compression force on the being directly compressed surface of the gasket capable of being crammed in its groove, and for a straight leak type, the compression force on the seating surface of the gasket capable of being crammed in its groove because it has only one seating surface. In order to be evenly crammed against each side of the groove, the gasket can be chamfered to overcome its variation in volume caused by the manufacturing error.

Fig.1 shows a curve leak type of pressure-tight gland seals in accordance with the invention, whose groove is of a square section 1-2-3-4. The pre-fastening force required to achieve a certain value of m for the end thrust type shown in Fig.1a shall be the compression force on the surface 1-4 or 2-3 of the gasket 3a capable of being crammed in its groove because the surfaces 1-4 and 2-3 are the being directly compressed surface and have an identical forming rotation radius and an identical area and an identical stress; the leak joint of surfaces 1-2 and 3-4 does not result in leaking along the seating surface after ensuring the leakfree joint of surfaces 1-4 and 2-3, but may result in leaking through the microchannels in the seating material bulk, and should also be eliminated by cramming. Similarly, the pre-fastening force required to achieve a certain value of m for the shoulder thrust type shown in Fig.1b shall be the compression force on the surface 1-2 or 3-4 of the gasket 3a capable of being crammed in its groove.

Fig.2 shows a curve leak type of self-energizing gland seals in accordance with the invention, whose groove is of a square section 1-2-3-4 and whose gasket is originally of an O-shaped section. If ensuring a contact length a' and an avoidance or contactless chord length k'a' in section between the gasket and its groove and having $k' > \sqrt{2}$ after installed and at no fluid pressure, a soft gasket capable of transmitting pressure by a near liquid behavior will have a sealing maintenance factor or a disturbance resistance index (m) nearly more than $\sqrt{2}$ at each seating length a' of the four sides and will have a greater value of m once one length a' close to the leaking entrance $L_i$ gets leak at a fluid pressure, and at last even a hard gasket incapable of transmitting pressure by a near liquid behavior will also have a sealing maintenance factor or a disturbance resistance index (m) absolutely more than one at two seating lengths a' close to the leaking exit $L_o$ because the hypotenuse (the fluid's sealing actuation surface) of an isosceles right triangle is absolutely equal to $\sqrt{2}$ times its leg but the seating lengths a' (the fluid's unseating actuation surface) is shorter than the leg or only a part of the leg. In other words, the gland seals shown in Fig.2 can be safe whether their gaskets 03b are of an elastomer or of a non-elastomer or even if their O-rings 03b are somewhat hardened at a glass transition temperature. Therefore, the gland seal of the invention shown in Fig.2 is safest and can be simply ensured by making $k' > \sqrt{2}$; moreover so is it to use a non-O-shaped section of gaskets 03b not crammed to the pressurized corner of the groove. Perhaps there might be no Challenger Disaster caused by a little glass transition of O-ring seals at -2.2°C in 1986 if that gland seal was designed according to the invention.

Fig.3 shows a straight leak type of pressure-tight gland seals in accordance with the invention, whose groove is of a rectangular section 1-2-3-4 and whose leaking path is along the seating surface 1-2. Therefore, the gland seals shown in Fig.3, when designed, only need to consider making the gasket 3a be evenly crammed in its groove and ensuring that the ratio (m) of the fastener's sealing actuation force to the fluid's unseating actuation force on the seating surface 1-2 is greater than one, merely it is more adequate to use the self-energizing seals corresponding to Fig.4 instead of the rod type in Fig.3b and the piston type in Fig.3c for high pressure applications because it is inconvenient to exert a greater preload on the seating surface 1-2 of these pressure-tight seals by assembling.

Fig.4 shows a straight leak type of self-energizing gland seals in accordance with the invention, whose groove is of a rectangular section 1-2-3-4, and whose gasket is also originally of a rectangular section but gets more bulged in the middle with a more compression. Designing them according to the equation m = fluid's sealing actuation area divided by fluid's unseating actuation area shall at first pay attention to the fluid pressure transmitting ability of the gasket (03b) material by its liquid behavior because the original definition of the factor m is the ratio of the force capable of resulting in a sealing stress on the seating surface divided by the unseating force of leaking fluid on the seating surface, and then pay attention to the gap between the gasket and the pressurized wall of its groove that can not be so great as to result in the unseating actuation area getting greater than the sealing actuation area or to make the leak state get stabler than the leakfree state as soon as the joint is leak.

As to the self-energizing gasket (03b) of face type gland seals shown in Fig.4a, its fluid's sealing actuation area equals $\pi D k_1 a_1$, its fluid's unseating actuation area equals $\pi(D+a_1)a_1$, and so the ratio (m) of its fluid's sealing actuation area to its fluid's unseating actuation area equals $k_1/(1+ a_1/D)$; therefore, the ratio ($k_1$) of its groove height ($k_1 a_1$) to its seating width ($a_1$) shall be greater than $(1+a_1/D)$ [or it shall satisfy the inequality: $k_1 > (1+a_1/D)$] to ensure a safe seal or to enable value of the factor into be over one when it is made of soft materials with an enough liquid behavior or with a Poisson's ratio approximate to 0.5 or when it can fully change the pressure on its fluid's sealing actuation surface into the sealing stress on its seating surface, and perhaps it should satisfy the inequality: $k_1 > 2(1 + a_1/D)$ to ensure a safe seal or to enable value of the factor m to be over two when it is made of hard materials without an enough liquid behavior or without a Poisson's ratio approximate to 0.5 or when it could at most half change the pressure on its fluid's sealing actuation surface into the seating stress on its seating surface.

As to the self-energizing gasket (03b) of rod type gland seals shown in Fig.4b, its fluid's sealing actuation area equals $\pi(D+a_2)a_2$, its fluid's unseating actuation area equals $\pi D k_2 a_2$, and so the ratio (m) of its fluid's sealing actuation area to its fluid's unseating actuation area equals $(1+a_2/D)/k_2$; therefore, the ratio ($k_2$) of its seating width ($k_2 a_2$) to its groove height ($a_2$) shall be smaller than $(1+a_2/D)$ [or it shall satisfy the inequality: $k_2 < (1+a_2/D)$] to ensure a safe seal or to enable value of the factor m to be over one when it is made of soft materials with an enough liquid behavior or with a Poisson's ratio approximate to 0.5 or when it can fully change the pressure on its fluid's sealing actuation surface into the sealing stress on its seating surface, and perhaps it should satisfy the inequality: $2k_2 < (1+a_2/D)$ to ensure a safe seal or to enable value of the factor m to be over two when it is made of hard materials without an enough liquid behavior or without a Poisson's ratio approximate to 0.5 or when it could at most half change the pressure on its fluid's sealing actuation surface into the seating stress on its seating surface.

As to the self-energizing gasket (03b) of piton type gland seals shown in Fig.4c, its fluid's sealing actuation area equals $\pi(D-a_3)a_3$, its fluid's unseating actuation area equals $\pi D k_3 a_3$ and so the ratio (m) of its fluid's sealing actuation area to its fluid's unseating actuation area equals $(1- a_3/D)/k_3$ ; therefore, the ratio ($k_3$) of its seating width ($k_3 a_3$) to its groove height ($a_3$) shall be smaller than $(1-a_3/D)$ for it shall satisfy the inequality:$k_3 < (1-a_3/D)]$ to ensure a safe seal or to enable value of the factor m to be over one when it is made of soft materials with an enough liquid behavior or with a Poisson's ratio approximate to 0.5 or when it can fully change the pressure on its fluid's sealing actuation surface into the sealing stress on its seating surface, and perhaps it should satisfy the inequality: $2k_3 < (1-a_3/D)$ to ensure a safe seal or to enable value of the factor m to be over two when it is made of hard materials without an enough liquid behavior or without a Poisson's ratio approximate to 0.5 or when it could at most half change the pressure on its fluid's scaling actuation surface into the seating stress on its seating surface.

What shows in Figs.6a~6c are respectively the gland seals in Figs.4a~4c whose original gasket has changed from a rectangular to an O-shaped section. Theoretically supposing a d diameter section of O-shaped gaskets in pressurized groove gets into a rectangular section 5-6-2-3 of gaskets and their material is incompressible with a Poisson's ratio of 0.5, the O-ring gland seal for face applications in Fig.6a has the following relation expressions:

$$\left(\pi d^2/4\right)\cdot \pi \cdot \left(D + a_1 - 2c\right) = k_1 a_1{}^2 \cdot \pi \cdot \left(D + a_1\right)$$

(O-ring's bulk = Rectangular ring's bulk)

$$\square \quad k_1 a_1 < d \ , \ k_1{}^2 a_1{}^2 << d^2 \qquad \text{(O-ring needs to be compressed in groove)}$$

$$\left(D + a_1 - 2c\right) \approx \left(D + a_1\right) \qquad (D \gg a_1 \gg 2c,\ c \text{ is designed to be small})$$

$$\square \quad \left(\pi k_1{}^2 a_1{}^2/4\right)\cdot\left(D + a_1\right) < k_1 a_1{}^2\left(D + a_1\right)$$

$$\pi k_1/4 < 1$$

$$k_1 < 4/\pi$$

the O-ring gland seal for rod applications in Fig.6b has the following relation expressions:

$$\left(\pi d^2/4\right)\cdot \pi \cdot \left(D + a_2\right) = k_2 a_2{}^2 \cdot \pi \cdot \left(D + a_2\right)$$

(O-ring's bulk = Rectangular ring's bulk)

$$\square \quad a_2 < d \qquad \text{(O-ring needs to be compressed in groove)}$$

$$\square \quad \left(\pi a_2{}^2/4\right) < k_2 a_2{}^2$$

$$\pi/4 < k_2$$

and the O-ring gland seal for piston applications in Fig.6c has the following relation expressions:

$$\left(\pi d^2/4\right)\cdot\pi\cdot\left(D-a_3\right)=k_3 a_3{}^2\cdot\pi\cdot\left(D-a_3\right)$$

(O-ring's bulk = Rectangular ring's bulk)

$\square$  $a_3 < d$       (O-ring needs to be compressed in groove)

$\square$  $\left(\pi a_3{}^2/4\right) < k_3 a_3{}^2$

$\pi/4 < k_3$

Therefore, to ensure a sealing safety of the self-energizing O-ring gland seals for face applications in Fig.6a is to ensure that their designs satisfy the inequality: $(1+a_1/D)<k_1 < 4/\pi$, where. $k_1$ is the ratio of the height $(k_1 a_1)$ of the groove to the theoretical seating width $(a_1)$ of the rectangular ring into which the O-ring got in the pressurized groove, D is the theoretical minor diameter of the rectangular ring, and $\pi$ is the pi;

to ensure a sealing safety of the self-energizing O-ring gland seals for rod applications in Fig.6b is to ensure that their designs satisfy the inequality: $(1+a_2/D)>k_2 > \pi/4$, where $k_2$ is the ratio of the theoretical seating width $(k_2 a_2)$ of the rectangular ring into which the O-ring got in the pressurized groove to the height $(a_2)$ of the groove, D is the minor diameter of the groove, and $\pi$ is the pi; and

to ensure a sealing safety of the self-energizing O-ring gland seals for piston applications in Fig.6c is to ensure that their designs satisfy the inequality: $(1-a_3/D) > k_3 > \pi/4$, where $k_3$ is the ratio of the theoretical seating width $(k_3 a_3)$ of the rectangular ring into which the O-ring got in the pressurized groove to the height $(a_3)$ of the groove, D is the major diameter of the groove, and x is the pi.

In sum, a rectangular gasket of self-energizing gland seals can be designed to have a greater self-sealing ability than an O-shaped gasket (O-ring) because the latter has two k-value assigning limits and the former has only one k-value assigning limit. Besides, an O-shaped gasket has a greater deforming and moving amplitude and a speeder surface wear at impulse pressures than a rectangular gasket, whereas the rectangular gasket is initially closer to its last working shape and position in section and can have a better working standby and stability than the O-shaped gasket. Therefore, it is more adequate to select a rectangular gasket instead of an O-shaped gasket in a straight leak type of self-energizing gland seals. The O-shaped gasket is more suitable for use in a cure leak type of self-energizing gland seals.

The gland seal in Fig.5a is a variety of the face type (an axial type) in Fig.3a and can be designed and selected according to the end thrust type in Fig.1a. The gland seal in Fig.5b is a variety of the face type (an axial type) in Fig.4a and can be so designed and selected as in Fig.4a.

Finally, it should be pointed out that the groove of the invention can have some fillet and some wall angle, and can also have a shaped wall for use with an X-shaped section of gaskets.

**Claims**

1. A curve leak type of pressure-tight gland seals comprising a square section of annular grooves and a square section of annular gaskets crammed tight therein, wherein the leaking path of the gland seal is of a curve in section, and the sealing maintenance factor m of the gland seal has a value of more than one, where m is the ratio of the fastener's actuation force capable of resulting in a seeing stress on the seating surface of the gasket to the unseating actuation force of leaking fluid on the seating surface of the gasket.

2. A curve leak type of self-energizing gland seals comprising a square section of annular grooves and an O-shaped or non-O-shaped section of annular gaskets not crammed to the pressurized wall of the groove, wherein the leaking path of the gland seal is of a curve in section, and the sealing maintenance factor m of the gland seal has a value of more than one, where m is the ratio of the self-energizing actuation force of the gasket to the unseating actuation force of leaking fluid on the seating surface of the gasket.

3. A curve leak type of self-energizing gland seals in accordance with claim 2, wherein the gasket is of an O-shaped section before installed and has a contact length a' and a contactless chord length k'a' with each side of the groove in section at no fluid pressure after installed, where k' is more than $\sqrt{2}$.

**4.** A straight leak type of pressure-tight gland seals comprising a rectangular section of annular grooves and a rectangular section of annular gaskets crammed tight therein, wherein the leaking path of the gland seal is straight in section, and the sealing maintenance factor in of the gland seal has a value of more than one, where m is the ratio of the fastener's actuation force capable of resulting in a sealing stress on the seating surface of the gasket to the unseating actuation force of leaking fluid on the seating surface of the gasket.

**5.** A straight leak type of self-energizing gland seals comprising a rectangular section of annular grooves and a rectangular section of annular gaskets not crammed to the pressurized wall of the groove, wherein the leaking path of the gland seal is straight in section, and the sealing maintenance factor m of the gland seal has a value of more than one, where m is the ratio of the self-energizing actuation force of the gasket to the unseating actuation force of leaking fluid on the seating surface of the gasket.

**6.** A straight leak type of self-energizing gland seals comprising a rectangular section of annular grooves and an O-shaped section of annular gaskets (called an O-ring) not crammed to the pressurized wall of the groove, wherein the leaking path of the gland seal is straight in section, but the design for face seal applications (where the gasket's end face is the seating surface) shall satisfy the inequality: $(1+a_1/D)<k_1 < 4/\pi$, where $k_1$ is the ratio of the height ($k_1a_1$) of the groove to the theoretical seating width ($a_1$) of the rectangular ring into which the O-ring got in the pressurized groove, D is the theoretical minor diameter of the rectangular ring, and $\pi$ is the pi; the design for rod seal applications (where the groove is in the cylinder) shall satisfy the inequality: $(1 + a_2/D) > k_2 > \pi/4$, where $k_2$ is the ratio of the theoretical seating width ($k_2a_2$) of the rectangular ring into which the O-ring got in the pressurized groove to the height ($a_2$) of the groove, D is the minor diameter of the groove, and $\pi$ is the pi; and the design for piston seal applications (where the groove is in the piston) shall satisfy the inequality: $(1 - a_3/D) > k_3 > \pi/4$, where $k_3$ is the ratio of the theoretical seating width ($k_3a_3$) of the rectangular ring into which the O-ring got in the pressurized groove to the height ($a_3$) of the groove, D is the major diameter of the groove, and $\pi$ is the pi.

Fig.1a

Fig.1b

Fig.2a

Fig.2b

Fig.3a

Fig.3b

Fig.3c

Fig.4a

Fig.4b

Fig.4c

Fig.5a

Fig.5b

Fig.6a

Fig.6b

Fig.6c

# INTERNATIONAL SEARCH REPORT

International application No.

PCT/CN2009/000284

## A. CLASSIFICATION OF SUBJECT MATTER

See the extra sheet

According to International Patent Classification (IPC) or to both national classification and IPC

## B. FIELDS SEARCHED

Minimum documentation searched (classification system followed by classification symbols)

IPC: F16J15/+,F16K,F16L

Documentation searched other than minimum documentation to the extent that such documents are included in the fields searched

Electronic data base consulted during the international search (name of data base and, where practicable, search terms used)

WPI,EPODOC,PAJ,CNPAT,CNKI , seal+, leak+, square, quadratic, rectangle, rectangular, oblong, line??, curve

## C. DOCUMENTS CONSIDERED TO BE RELEVANT

| Category* | Citation of document, with indication, where appropriate, of the relevant passages | Relevant to claim No. |
|---|---|---|
| X | US2002/0130292A1 （NOLAN B et al.） 19 Sep.2002 （19.09.2002）<br>[0008] of the description, claim 15 and fig.3 | 1 |
| X | GB2158529A（METAL WORK SPA）13 Nov. 1985（13.11.1985）<br>claims 1,7 and figs.1-2 | 2-3,6 |
| X | CN2116141U（JILIN PROV YANBIAN INST SCI & TECHNOLOGY ）<br>16 Sep. 1992（16.09.1992）claim 1 and fig.1 | 4 |
| X | US5957508A（BOSCH GMBH ROBERT）28 Sep.1999（28.09.1999）<br>col.2,lines 50-63 and fig.1 | 5 |

☒ Further documents are listed in the continuation of Box C.    ☒ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim (S) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 09 Sep.2009 （09.09.2009） | **01 Oct. 2009 (01.10.2009)** |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br>    YU, Jiangxia<br>Telephone No. (86-10)62085480 |

Form PCT/ISA /210 (second sheet) (July 2009)

## INTERNATIONAL SEARCH REPORT

| International application No. |
| --- |
| PCT/CN2009/000284 |

C (Continuation).     DOCUMENTS CONSIDERED TO BE RELEVANT

| Category* | Citation of document, with indication, where appropriate, of the relevant passages | Relevant to claim No. |
| --- | --- | --- |
| A | EP0061752A1 （HUMMEL METALLWARENFAB A） 06 Oct.1982 （06.10.1982） the whole document | 1-6 |
| A | CN1920363A （ZHEJIANG CHINA VALVE CO LTD） 28 Feb. 2007 （28.02.2007） the whole document | 1-6 |

Form PCT/ISA /210 (continuation of second sheet ) (July 2009)

| INTERNATIONAL SEARCH REPORT<br>Information on patent family members | | International application No.<br>PCT/CN2009/000284 | |
|---|---|---|---|
| Patent Documents referred in the Report | Publication Date | Patent Family | Publication Date |
| US2002/0130292A1 | 19.09.2002 | US6837482B | 04.01.2005 |
| | | EP1243821A | 25.09.2002 |
| | | EP1243821B1 | 14.06.2006 |
| | | DE60212231T | 19.04.2007 |
| GB2158529A | 13.11.1985 | DE8513179U | 13.06.1985 |
| | | FR2564168A | 15.11.1985 |
| | | ES286515U | 01.12.1985 |
| CN2116141U | 16.09.1992 | none | |
| US5957508A | 28.09.1999 | DE19632956A | 19.02.1998 |
| | | EP0825374A | 25.02.1998 |
| | | JP10078178A | 24.03.1998 |
| EP0061752A1 | 06.10.1982 | DE3113107A | 21.10.1982 |
| | | DE3113107C | 13.12.1984 |
| | | EP0061752B | 30.01.1985 |
| | | DE3262099G | 14.03.1985 |
| CN1920363A | 28.02.2007 | WO2007022721A1 | 01.03.2007 |
| | | US2008217568A1 | 11.09.2008 |
| | | US2008231000A | 25.09.2008 |
| | | WO2007022722A | 01.03.2007 |

Form PCT/ISA /210 (patent family annex) (July 2009)

## INTERNATIONAL SEARCH REPORT

International application No.

PCT/CN2009/000284

**A. CLASSIFICATION OF SUBJECT MATTER**

F16J15/06(2006.01)i

F16J15/18(2006.01)i

**EP 2 375 110 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5516122 A